# EUROPEAN PATENT SPECIFICATION

(11) **EP 0 841 001 B1**
(45) Date of publication and mention of the grant of the patent: **02.01.2002**
(21) Application number: 97203468.0
(22) Date of filing: 08.11.1997
(51) Int. Cl.: A01F 12/24

(54) **Concave latch mechanism for an agricultural combine**
Verriegelungsvorrichtung des Dreschkorbes eines Mähdreschers
Mécanisme de verrouillage du contrebatteur de moissonneuse-batteuse

(30) Priority: 12.11.1996 US 30498 P; 06.11.1997 US 963572
(43) Date of publication of application: 13.05.1998
(73) Proprietor: NEW HOLLAND BELGIUM N.V., B-8210 Zedelgem (BE)
(72) Inventor: Strong, Russel W., Craftsbury Common, VT 05827 (US); Grove, Floyd W., New Holland, PA 17557 (US); Lehman, Barry E., York, PA 17406 (US); Cromheecke, Eric L.A., 8450 Bredene (BE)
(74) Representative: Vandenbroucke, Alberic

(56) References cited:
- DE-B- 1 279 414
- FR-A- 2 234 849
- FR-A- 2 250 467
- GB-A- 2 099 676
- US-A- 2 743 728
- US-A- 3 957 058

## Description

This invention relates to an agricultural combine harvester, more specifically to the concave suspension of such a combine, as disclosed in the first part of claim 1. One device of this kind corresponding to the first part of claim 1 is already described in US-A-3 871 384.

Conventional and rotary threshing systems typically involve passing the crop between a spinning cylinder or rotor and concave means. The concave means, cylinder and rotor possess protrusions or rubbing elements which rub the crop. This causes the grain to separate from the stalks.The distance between the concave means and cylinder, respectively the rotor is a critical function. Depending on the type and hardness of the grain, this distance is varied. Furthermore, it is often necessary to remove the concave means for maintenance or for inserting or removing the rubbing elements. Because of the force placed on the concave means either by the crops or the spinning cylinder, respectively rotor, the concave means typically are built for durability. Most concave means are heavy and difficult to position within a combine.

Most concave means are bolted onto the combine frame making their removal and installation a difficult undertaking. An additional problem with existing concave means is the vibrational noise created when the cylinder or rotor is rotating.

Consequently, it is the objective of the present invention to provide concave means which allow easy removal, installation and adjustment and furthermore minimize the vibrational noise while the threshing system is operating.

A concave support and latch mechanism for a combine is provided having an adjust pin and a concave pin provided at spaced apart locations on the concave. The adjust pin is inserted into a support slot located on the combine frame. The concave pin is inserted into a hinge housing which is also attached to the frame. The hinge housing has a lever attached thereto for pivoting the same. The hinge housing comprises a curved cradle plate. The concave pin normally rests on the cradle plate. The cradle plate has an aperture which may be oriented upwards or downwards by manipulating the lever. The concave pin is inserted through the aperture while the lever is raised and is aligned with the hinge housing pivot pin when the lever is lowered. To minimize vibrational noise created by the rotor, an isolation mount is placed between the hinge housing and the frame. The aperture may also have a sloped lead-in to assist the placement of the concave pin into the aperture.

The invention will now be described in greater detail with reference to the accompanying drawings wherein:
Figure 1 is an elevation view of an agricultural combine with parts broken away to reveal the threshing rotor and concave along with the cleaning means.
Figure 2 is a side view of a latch mechanism for latching the concave to the combine frame.
Figure 3 is a front view of the latch mechanism in the closed position without a concave pin in the cradle plate.
Figure 4 is a front view of the latch mechanism showing the motion of the handle grip, lever, cradle plate and aperture.
Figure 5 is a front view of one side of the threshing and separating system without the threshing rotor.
Figure 6 is a front view of the concave without the latch mechanism indicating the movement of the concave.
Figure 7 is a bottom side view of the latch mechanism in the position about to receive the concave pin.

Left and right references are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface. Horizontal or vertical planes are also relative to ground.

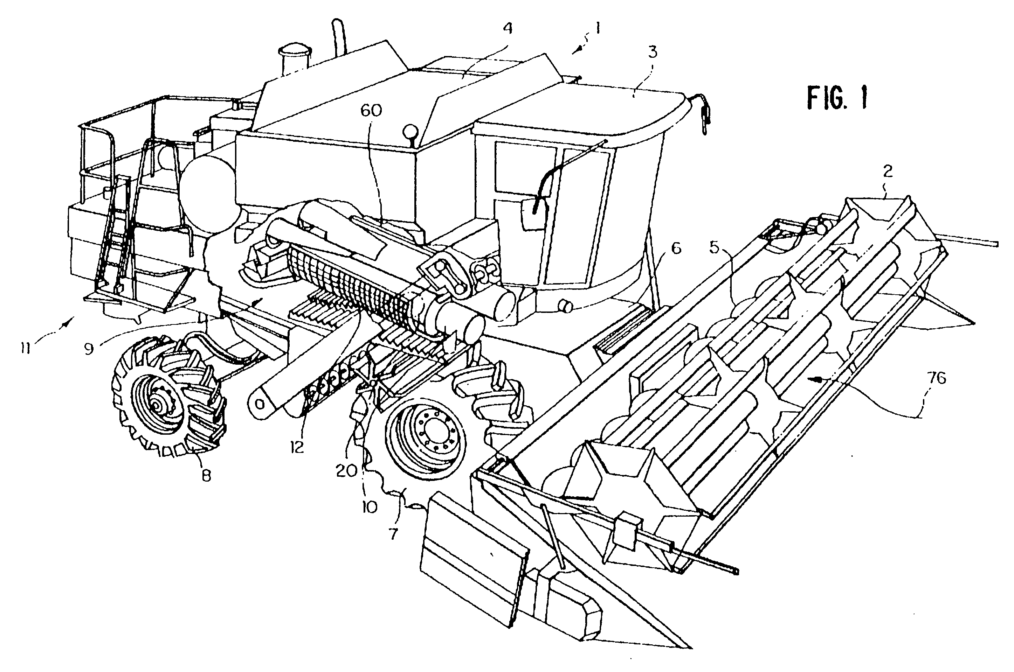

Figure 1 illustrates a typical twin rotor combine 1 having a pair of front wheels 7 (only one shown) and a pair of rear wheels 8 (only one shown). At the front of the combine is a header means 2 for receiving the crop from the field. The header moves the crop into an auger trough. A transverse auger 5 pushes the crop in the auger trough to the centre of the header. Located at the centre and rearwardly of the header is the feeder or elevator 6. The feeder 6 moves the crop rearwardly into the threshing and separation systems 9 of the combine. Threshed and cleaned grain is stored in a grain tank 4 located near the top of the combine. The trash or chaff is ejected from the rear 11 of the combine. The operator controls the combine 1 from the cab 3 located behind the header 2 and at the front of the combine.

In figure 1, the threshing and separating systems 9 use a pair of parallel rotors 10. The axes of the rotors 10 are generally parallel to the overall direction of flow of the crop 76 from the front to the rear through the machine. Surrounding a portion of each rotor 10 are one or more concaves 12. Typically crop exits the feeder house and passes between the concaves 12 and rotors 10. The spinning rotors 10 and stationary concaves 12 act to rub the grain from the stalks. A typical rotor 10 is rotating at a high speed in a range of 600 to 1700 rpm depending on the crop being harvested. This results in a number of stresses being placed on the threshing and separating system. As a result of these stresses, the threshing and separating systems are typically crafted using heavy, durable materials. The weight and size of these components make installation, repair and replacement of various portions of the threshing and separating systems difficult. Frequently it is necessary to alter the rotor configuration or add rubbing elements to the concaves. To facilitate this, particular concave support and latching means are provided. These include a latch mechanism 20 which is affixed to the frame 50 and which is operable to support a concave on the frame and to secure it thereto. There can be a single latch mechanism per concave or several. Typically covering the entire area is a side shield 60 (partially cut-away).

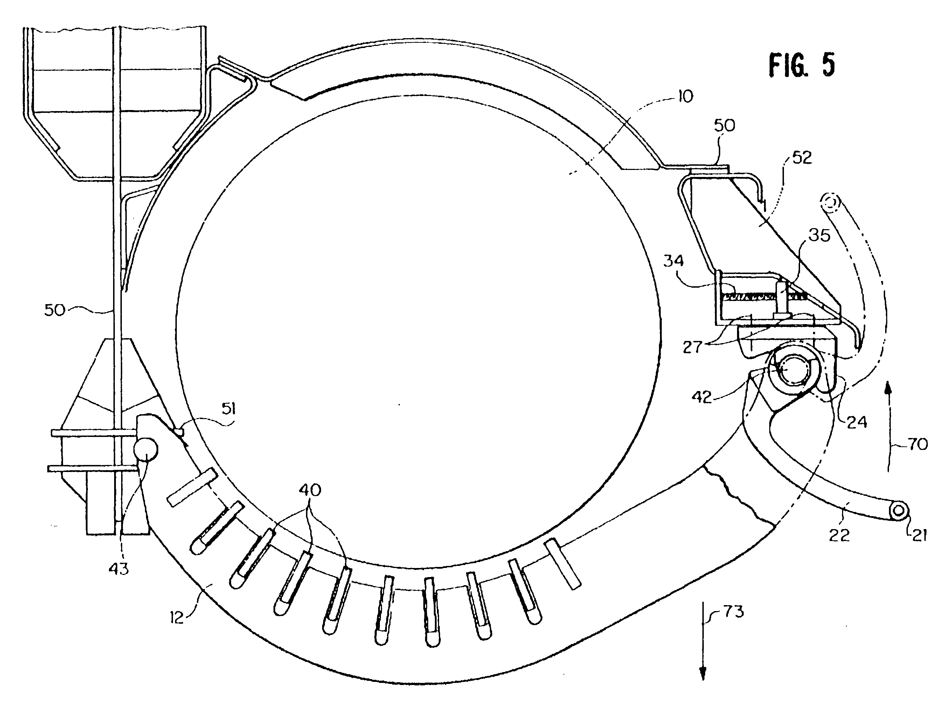

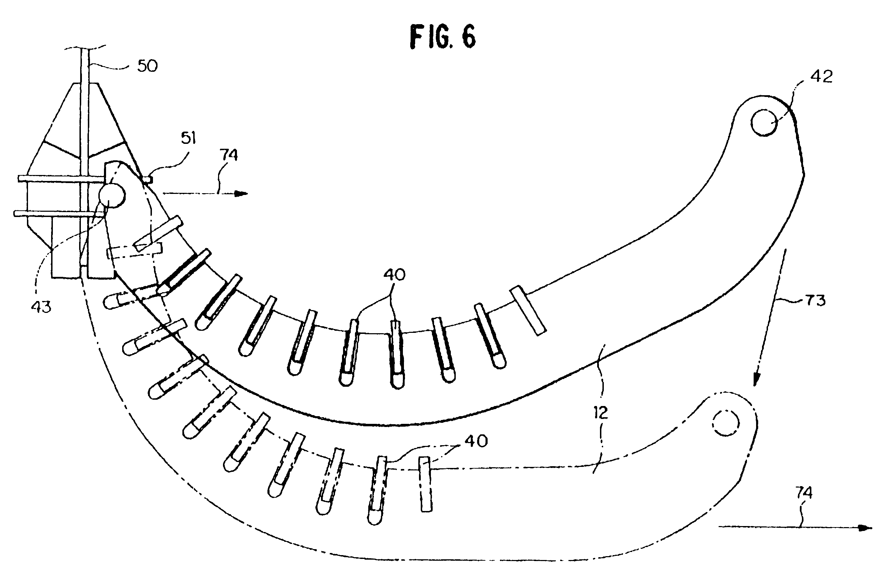

Figures 5 and 6 show a concave 12 partially surrounding a single rotor 10 as viewed from a forward position. As seen in figure 5, the concave 12 is approximately arcuate and is constructed from heavy, durable materials. A plurality of rubbing bars 40 can be placed into the concave 12 to alter the rubbing of the crop between the rotor 10 and the concave 12. The concave 12 has an adjust pin 43 for attaching the concave 12 to an inside element of the frame 50. The opposite side of the concave 12 is ultimately attached to the frame 50 by a concave pin 42 which can be seen in figures 5, 6 and 7. The adjust pin 43 and concave pin 42 are circular, heavy-duty pins capable of supporting the concave as well as withstanding the stresses induced by normal combine operations. The pins 42 and 43 are parallel to the axis of the rotor 10.

The adjust pin 43 is attached to the frame 50 through a support slot 51 as seen in figures 5 and 6. The support slot 51 consists of a pair of parallel plates for slidably receiving the adjust pin 43. As seen in figure 6, using the support slot 51 as an attachment means allows the concave 12 to be rotated 73 about the adjust pin 43. Alternatively, as illustrated in figure 6, the concave 12 may be lowered and then pulled away 74 from the support slot 51 and the centre of the combine for removal.

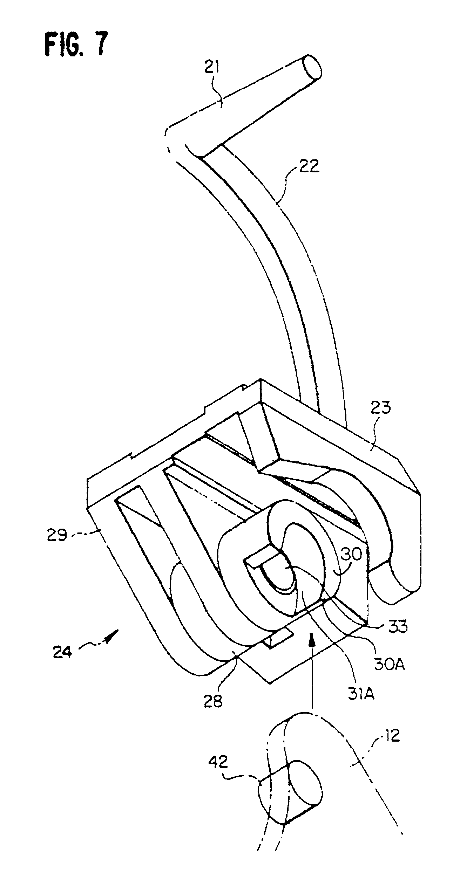

The concave pin 42 is ultimately attached to the frame 50 by a hinge housing 24, as generally observed in figure 5. The hinge housing 24 is controlled by the motion 70 of a handle grip 21 and lever 22 which can also be generally observed in figure 5. Typically, the weight of the handle grip 21 and the lever 22 hold the grip 21 and the lever 22 in a lowered position. However, the grip 21 and the lever 22 can be rotated upwards 70, as illustrated by the phantom lines in figure 5. This rotation places the hinge housing 24 into the 'open' position permitting the concave pin 42 to enter from below or exit in a downward direction, the hinge housing 24 (as seen in figure 7). Usually the weight of the handle grip 21 and lever 22 will bias the hinge housing into a closed position, however the side shield 60 (partially seen in figure 1) prevents the handle grip 21 or lever 22 from inadvertently rotating to an upwards position.

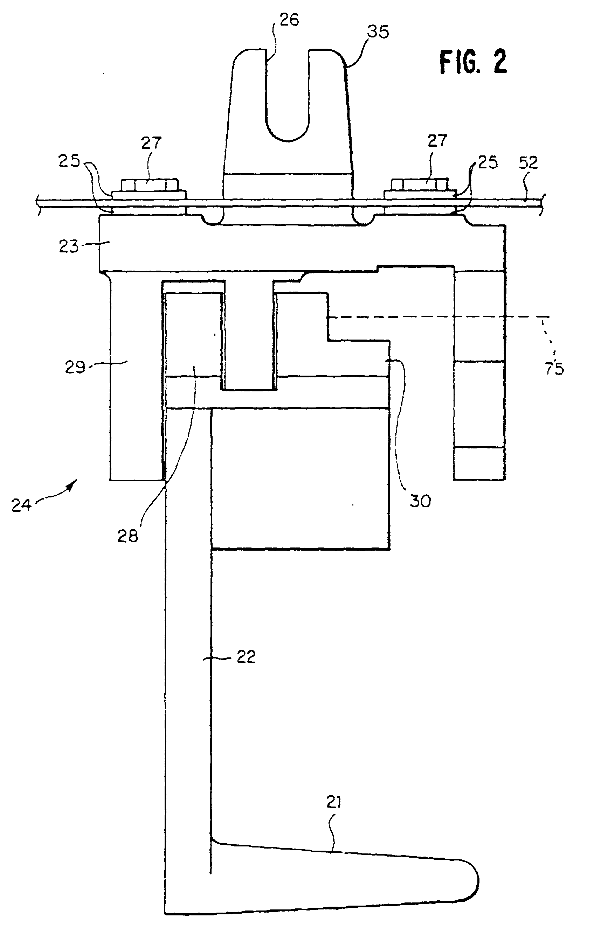

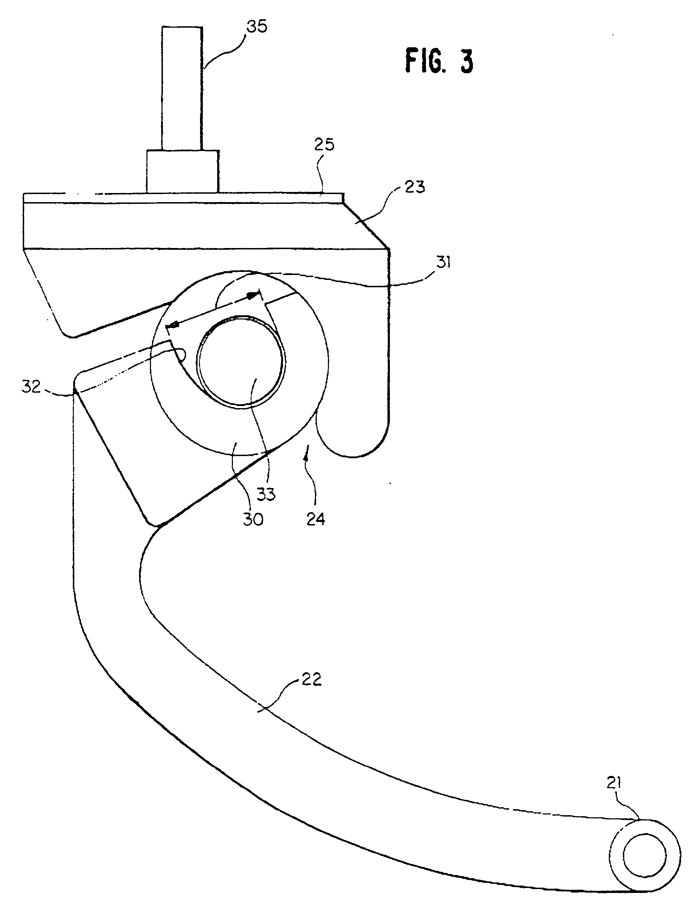

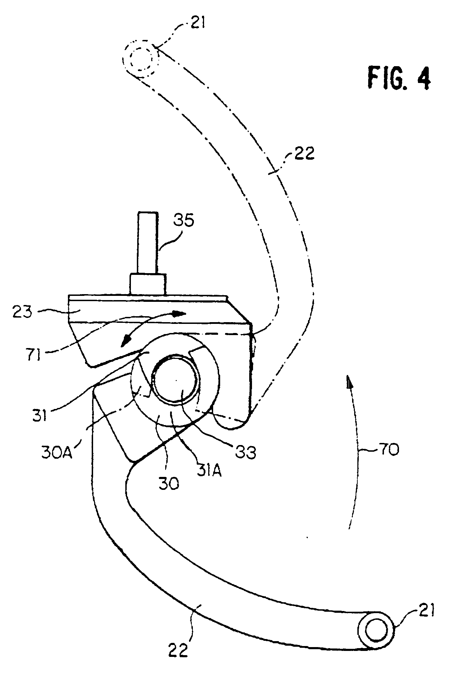

The details of the latch mechanism 20 including the hinge housing 24, the lever 22 and the handle grip 21 can be observed in figures 2, 3, 4 and 7. As seen in figure 2, the latch mechanism 20 comprises an attachment hinge 29 and a handle hinge 28 which rotates about the handle pin 33 (as seen in figure 4). As seen in figures 2 and 4, the rotation of the handle hinge 28 about the handle pin 33 is controlled by the lever 22. The attachment hinge 29 is affixed to the frame attachment 23. The frame attachment 23 is attached to the latch support 52 (seen in figure 5) which is attached to the frame 50. Extending from the handle hinge 28 is the curved cradle plate 30. The curved cradle plate 30 (as seen in figures 2 and 3) has an aperture 31.

Figure 5 illustrates one way of how the latch mechanism 20 can be adjusted relative to the latch support 52 and the frame 50. A slot 26 is a provided in a tab 35 attached to and extending from the frame attachment 23. The tab 35 extends through an appropriate opening in a base plate of the latch support 52. Passing through the slot 26 is a threaded bolt 34 which e.g. can be fixedly secured at one end to the latch support 52. A nut and counternut (not shown) are adjustably provided on the threaded bolt at opposite sides of the tab 35. By adjusting the nut and counternut relative to the threaded bolt 34, the position of the tab 35, the frame attachment 23 and hence also the entire latch mechanism 20 relative to the frame 50 can be changed. After adjustment of the frame attachment 23, fixation between the frame attachment 23 and the latch support 52 is accomplished by four positive retention studs 27 (only two shown). The latch support 52 has several slotted holes (not shown) for adjustably receiving the studs 27. To minimize vibration transmission between the concave 12 and frame 50, elastic isolation mounts 25 can be inserted between the latch support 52 and the frame attachment 23 on the one hand and between the latch support 52 and the retention studs 27 on the other hand. It should be noted that this adjustment is primarily meant to be used during the initial installation of the latch mechanism 20 and the concave 12. However, adjustment can also be made later on for varying the relative position of the rotor 10 and the concave 12 to accomplish a minimum amount of eccentricity therebetween.

Normally, the concave pin 42 rests in the cradle plate 30. By lifting the handle grip 21 and the lever 22 upwards, the cradle plate 30 rotates 71 until the aperture 31 is oriented downwards 31A or into the 'open' position. This allows the concave pin 42 to be removed or inserted into the cradle plate 30 (as seen in figure 7). Once the concave pin 42 exits the cradle plate 30, the concave moves downward 73. The concave 12 may then be pulled away 74 from the combine. At this point, the adjust pin 43 will slide from the support slot 51 allowing the entire concave 12 to be removed from the combine.

To install the concave 12, the adjust pin 43 is inserted into the support slot 51. The handle grip 21 is rotated upwards 70, orienting the aperture 31 downwards 31A, again in the 'open' position. After the concave pin 42 is inserted through the aperture 31A and into the cradle plate 30, the handle grip 21 can be lowered. As the aperture 31 moves to the upward position 71, the concave pin 42 and handle pin 33 will align onto a single axis 75. This axis 75 is parallel to the rotor axis. In a secondary embodiment, a portion of the aperture 31 can be slightly sloped to assist in the insertion of the concave pin 42 into the cradle plate 30.

It will be appreciated that, while the above description refers to one adjust pin 43 and one support slot 51, each concave preferably will have such adjust pins at its forward and rearward ends, each one of which will be cooperable with a corresponding support slot 51 on the frame 50. As to the latch mechanisms 20, each concave 12 may have one such mechanism associated therewith. However, preferably one such mechanism is provided at the forward and at the rearward ends of the concave.

During harvesting operations, the weight of the concave pin 42 against the cradle plate 30 prevents the lever 22 and the handle grip 21 from rotating and inadvertently opening. However, the side shield 60 impedes the motion of the lever and grip.

## Claims

1. A combine harvester (1) having a threshing and separating mechanism (9) including a concave (12) supported on and latched to the combine frame (50) by concave support and latch means; said combine being **characterized in that** the concave support and latch means comprise :
an first pin (43) attached to the concave (12) and slidably receivable in a support slot (51) on the frame (50); and
a further pin (42) attached to the concave (12) at a location spaced from the first pin (43); said further pin (42) being receivable in a latch mechanism (20) also supported on the frame (50).

2. A combine harvester according to claim 1, **characterized in that** the latch mechanism (20) comprises a hinge housing (24) movable between first and further positions and capable of receiving the further pin (42) when in the first position and of securing this further pin (42) to the frame (50) when in the further position whereby the further pin (42) can be removed allowing the first pin (43) to be removed from the support slot (51) thus permitting the concave (12) to be removed from the harvester (1).

3. A combine harvester according to claim 2, **characterized in that** the hinge housing (24) includes a curved cradle plate (30) with an aperture (31) therein; said cradle plate (30) being capable of receiving the further pin (42) through the aperture (31) when the hinge housing (24) is in the first position and securing the further pin (42) to the frame (50) when the hinge housing (24) is in the further position.

4. A combine harvester according to claim 3, **characterized in that** a lever (22) with a handle grip (21) is attached to the cradle plate (30) for permitting movement of this cradle plate (30) between the first and further positions of the hinge housing (24).

5. A combine harvester according to claim 4, **characterized in that** the latch mechanism (20) includes a frame attachment (23) affixed to the frame (50) through a latch support (52) and hingably supporting the cradle plate (30), the lever (22) and the handle grip (21).

6. A combine harvester according to claim 5, **characterized in that** the latch mechanism (20) includes a handle hinge (28) affixed to the lever (22), an attachment hinge (29) affixed to the frame attachment (23) and a handle pin (30) inserted between the attachment hinge (29) and the handle hinge (28) whereby the handle hinge (28) rotates about the attachment hinge (29).

7. A combine harvester according to any of the claims 4 to 6, **characterized in that** the further pin (42) is removed from the cradle plate (30) through the aperture (31) when the lever (22) is rotated upwards.

8. A combine harvester according to claim 5 or 6, or according to claim 7 when appended to either claim 5 or 6, **characterized in that** the frame attachment (23) is affixed to the latch support (52) on the frame (50) by positive retention stud means (27); the arrangement being such that the position of the frame attachment (23) relative to the latch support (52) can be changed.

9. A combine harvester according to claim 8, **characterized in that** isolation mounting means (25) are provided between the frame attachment (23) and the latch support (52) whereby vibration transmission between the concave (12) and the frame (50) is minimized.

10. A combine harvester according to claim 8 or 9, **characterized in that** the frame attachment (23) comprises a tab (35) with a slot (26) therein; said slot (26) receiving a threaded bolt (34) which is attached to the latch support (52) and said bolt (34) having a nut and counternut at opposite sides of the tab (35) for changing the position of the frame attachment (23) relative to the latch support (52).

11. A combine harvester according to claim 6 or any of the claims 7 to 10 when appended directly or indirectly to claim 6, **characterized in that** the further pin (42), while supported by the cradle plate (30), has a common axis (75) with the handle pin (33).

12. A combine harvester according to claim 4 or any of the claims 5 to 11 when appended directly or indirectly to claim 4, **characterized in that** inadvertent rotation of the lever (22) and the handle grip (21) during harvesting operation is impeded by a side shield (60).

13. A combine harvester according to any of the claims 3 to 12, **characterized in that** the support slot (51) comprises a pair of parallel plates into which the first pin (43) is inserted whereby, when the further pin (42) exits the cradle plate (30), the first pin (43) slides from the support slot (51) allowing the concave (12) to be removed from the combine (1).

14. A combine harvester according to any of the preceding claims, **characterized in that** at least two first pins (43) and associated support slots (51) are provided at spaced apart locations alongside one side of the concave (12) and at least two latch mechanisms (20) are provided at spaced apart locations alongside the opposite side of the concave (12).

## Patentansprüche

1. Mähdrescher (1) mit einem Dresch- und Trennmechanismus (9), der einen Dreschkorb (12) einschließt, der an dem Mähdrescher-Rahmen (50) mit Hilfe von Dreschkorb-Halterungs- und Verriegelungseinrichtungen gehaltert und verriegelt ist, wobei der Mähdrescher **dadurch gekennzeichnet ist, daß** die Dreschkorb-Halterungsund Verriegelungseinrichtungen folgendes umfassen:
einen ersten Bolzen (43), der an dem Dreschkorb (12) angebracht ist und verschiebbar in einem Halteschlitz (51) auf dem Rahmen (50) aufgenommen werden kann, und
einen weiteren Bolzen (42), der an dem Dreschkorb (12) an einer in Abstand von dem ersten Bolzen (43) angeordneten Stelle angebracht ist, wobei der weitere Bolzen (42) in einem Verriegelungsmechanismus (20) aufnehmbar ist, der ebenfalls an dem Rahmen (50) gehaltert ist.

2. Mähdrescher nach Anspruch 1, **dadurch gekennzeichnet, daß** der Verriegelungsmechanismus (20) ein Drehgelenkgehäuse (24) umfaßt, das zwischen ersten und weiteren Stellungen beweglich ist und in der Lage ist, den weiteren Bolzen (42) aufzunehmen, wenn es sich in der ersten Stellung befindet, und diesen weiteren Bolzen (42) an dem Rahmen (50) zu befestigen, wenn es sich in der weiteren Stellung befindet, wodurch der weitere Bolzen (42) entfernt werden kann, was es dem ersten Bolzen (43) ermöglicht, aus dem Halteschlitz (51) entfernt zu werden, so daß der Dreschkorb (12) aus dem Mähdrescher (1) entfernbar ist.

3. Mähdrescher nach Anspruch 2, **dadurch gekennzeichnet, daß** das Drehgelenkgehäuse (24) eine gekrümmte Wiegenplatte (30) mit einer darin ausgebildeten Öffnung (31) einschließt, daß die Wiegenplatte (30) in der Lage ist, den weiteren Bolzen (42) durch die Öffnung (31) hindurch aufzunehmen, wenn sich das Drehgelenkgehäuse (24) in der ersten Stellung befindet, und den weiteren Bolzen (42) an dem Rahmen (50) zu befestigen, wenn sich das Drehgelenkgehäuse (24) in der weiteren Stellung befindet.

4. Mähdrescher nach Anspruch 3, **dadurch gekennzeichnet, daß** ein Hebel (22) mit einem Handgriff (21) an der Wiegenplatte (30) befestigt ist, um die Bewegung dieser Wiegenplatte (30) zwischen der ersten und den weiteren Positionen des Drehgelenkgehäuses (24) zu ermöglichen.

5. Mähdrescher nach Anspruch 4, **dadurch gekennzeichnet, daß** der Verriegelungsmechanismus (20) eine Rahmenbefestigung (23) einschließt, die an dem Rahmen (50) über eine Riegelhalterung (52) befestigt ist und die Wiegenplatte (30), den Hebel (22) und den Handgriff (21) drehgelenkig haltert.

6. Mähdrescher nach Anspruch 5, **dadurch gekennzeichnet, daß** der Verriegelungsmechanismus (20) ein Handgriff-Drehgelenk (28), das an dem Hebel (22) befestigt ist, ein Befestigungs-Drehgelenk (29), das an der Rahmenbefestigung (23) befestigt ist, und einen Handgriffbolzen (30) einschließt, der zwischen dem Befestigungs-Drehgelenk (29) und dem Handgriff-Drehgelenk (28) eingesetzt ist, so daß sich das Handgriff-Drehgelenk (28) um das Befestigungs-Drehgelenk (29) dreht.

7. Mähdrescher nach einem der Ansprüche 4-6, **dadurch gekennzeichnet, daß** der weitere Bolzen (42) aus der Wiegenplatte (30) durch die Öffnung (31) hindurch entfernt wird, wenn der Hebel (22) nach oben gedreht ist.

8. Mähdrescher nach Anspruch 5 oder 6, oder nach Anspruch 7 unter Rückbeziehung auf entweder Anspruch 5 oder 6, **dadurch gekennzeichnet, daß** die Rahmenbefestigung (22) an der Riegelhalterung (52) auf dem Rahmen (50) durch Haltebolzeneinrichtungen (27) befestigt ist, wobei die Anordnung derart ist, daß die Position der Rahmenbefestigung (23) gegenüber der Riegelhalterung (52) änderbar ist.

9. Mähdrescher nach Anspruch 8, **dadurch gekennzeichnet, daß** Isolierbefestigungseinrichtungen (25) zwischen der Rahmenbefestigung (23) und der Riegelhalterung (52) vorgesehen sind, wodurch die Vibrationsübertragung zwischen dem Dreschkorb (12) und dem Rahmen (50) zu einem Minimum gemacht ist.

10. Mähdrescher nach Anspruch 8 oder 9, **dadurch gekennzeichnet, daß** die Rahmenbefestigung (23) eine Lasche (35) mit einem darin ausgebildeten Schlitz (26) umfaßt, daß der Schlitz (26) einen Gewindebolzen (34) aufnimmt, der an der Riegelhalterung (52) angebracht ist, und daß der Gewindebolzen (34) eine Mutter und eine Kontermutter auf gegenüberliegenden Seiten der Lasche (35) zur Änderung der Position der Rahmenbefestigung (23) gegenüber der Riegelhalterung (52) aufweist.

11. Mähdrescher nach Anspruch 6 oder einem der Ansprüche 7-10 unter direkter oder indirekter Beziehung auf Anspruch 6, **dadurch gekennzeichnet, daß** der weitere Bolzen (42) bei seiner Halterung durch die Wiegenplatte (30) eine gemeinsame Achse (75) mit dem Handgriffbolzen (30) aufweist.

12. Mähdrescher nach Anspruch 4 oder einem der Ansprüche 5-11 unter direkter oder indirekter Rückbeziehung auf Anspruch 4, **dadurch gekennzeichnet, daß** eine unbeabsichtigte Drehung des Hebels (22) und des Handgriffes (21) während des Erntebetriebs durch eine Seitenabdeckung (60) verhindert ist.

13. Mähdrescher nach einem der Ansprüche 3-12, **dadurch gekennzeichnet, daß** der Halteschlitz (51) ein Paar von parallelen Platten umfaßt, in die der erste Bolzen (43) eingesetzt ist, wodurch, wenn der weitere Bolzen (42) aus der Wiegenplatte (30) austritt, der ersten Bolzen (43) aus dem Halteschlitz (51) herausgleitet, was die Entfernung des Dreschkorbes aus dem Mähdrescher (1) ermöglicht.

14. Mähdrescher nach einem der vorhergehenden Ansprüche, **dadurch gekennzeichnet, daß** zumindest zwei Bolzen (43) und zugehörige Halteschlitze (51) am mit Abstand voneinander angeordneten Positionen entlang einer Seite des Dreschkorbes (12) vorgesehen sind, und daß zumindest zwei Verriegelungsmechanismen an mit Abstand voneinander angeordneten Stellen entlang der gegenüberliegenden Seite des Dreschkorbes (12) vorgesehen sind.

## Revendications

1. Moissonneuse-batteuse (1) possédant un mécanisme de battage et de séparation (9) comprenant une contre-batteur (12) soutenu et verrouillé sur le châssis (50) de la moissonneuse par un support de contre-batteur et des moyens de verrouillage; ladite moissonneuse étant **caractérisée en ce que** le support de contre-batteur et les moyens de verrouillage comprennent:
une première broche (43) fixée au contre-batteur (12) et pouvant être introduite avec coulissement dans une encoche de support (51) du châssis (50); et
une broche supplémentaire (42) fixée au contre-batteur (12) à un emplacement séparé de la première broche (43); ladite broche supplémentaire (42) pouvant être introduite dans un mécanisme de verrouillage (20) également solidaire du châssis (50).

2. Moissonneuse-batteuse selon la revendication 1, **caractérisée en ce que** le mécanisme de verrouillage (20) comprend un logement de charnière (24) pouvant se déplacer entre des positions première et supplémentaire et capable de recueillir la broche supplémentaire (42) lorsqu'il se trouve dans la première position, et de fixer cette broche supplémentaire (42) au châssis (50) lorsqu'il se trouve dans la position supplémentaire où la broche supplémentaire (42) peut être retirée pour autoriser l'enlèvement de la première broche (43) hors de l'encoche de support (51), en permettant ainsi d'enlever le contre-batteur (12) hors de la moissonneuse (1).

3. Moissonneuse-batteuse selon la revendication 2, **caractérisée en ce que** le logement de charnière (24) comprend une plaque incurvée en berceau (30) dotée d'une ouverture (31); ladite plaque en berceau (30) étant à même de recueillir la broche supplémentaire (42) au travers de l'ouverture (31) lorsque le logement de charnière (24) se trouve dans la première position, et de fixer la broche supplémentaire (42) au châssis (50) lorsque le logement de charnière (24) se trouve dans la position supplémentaire.

4. Moissonneuse-batteuse selon la revendication 3, **caractérisée en ce qu'**un levier (22) muni d'une poignée (21) est fixé à la plaque en berceau (30) afin de permettre le mouvement de cette plaque en berceau (30) entre les positions première et supplémentaire du logement de charnière (24).

5. Moissonneuse-batteuse selon la revendication 4, **caractérisée en ce que** le mécanisme de verrouillage (20) comprend un élément de châssis (23) fixé au châssis (50) au travers d'un support de verrou (52) soutenant avec charnière la plaque en berceau (30), le levier (22) et la poignée (21).

6. Moissonneuse-batteuse selon la revendication 5, **caractérisée en ce que** le mécanisme de verrouillage (20) comprend une poignée (28) fixée au levier (22), une charnière de fixation (29) fixée au levier (22), un élément de châssis (23) et une broche de poignée (30) insérée entre la charnière de fixation (29) et la charnière de poignée (29) où la charnière de poignée (28) pivote autour de la charnière de fixation (29).

7. Moissonneuse-batteuse selon l'une quelconque des revendications 4 à 6, **caractérisée en ce que** la broche supplémentaire (42) est retirée de la plaque en berceau (30) au travers de l'ouverture (31) lorsque le levier (22) est pivoté vers le haut.

8. Moissonneuse-batteuse selon la revendication 5 ou 6, ou selon la revendication 7 lorsqu'elle se rapporte à l'une quelconque des revendications 5 ou 6, **caractérisée en ce que** l'élément de châssis (23) est fixé au support de verrou (52) sur le châssis (50) par des moyens de tenons de rétention effective (27); l'arrangement étant tel que la position de l'élément de châssis (23) par rapport au support de verrou (52) peut être modifiée.

9. Moissonneuse-batteuse selon la revendication 8, **caractérisée en ce que** des moyens de montage d'isolation (25) sont prévus entre l'élément de châssis (23) et le support de verrou (52) de manière à minimiser la transmission de vibrations entre le contre-batteur (12) et le châssis (50).

10. Moissonneuse-batteuse selon la revendication 8 ou 9, **caractérisée en ce que** l'élément de châssis (23) comprend une patte (35) dotée d'une encoche (26); ladite encoche (26) recueillant un boulon fileté (34) fixé au support de verrou (52), et ledit boulon (34) possédant un écrou et un contre écrou aux faces opposées de la patte (35) afin de modifier la position de l'élément de châssis (23) par rapport au support de verrou (52).

11. Moissonneuse-batteuse selon la revendication 6 ou l'une quelconque des revendications 7 à 10 lorsqu'elle se rapporte directement ou indirectement à la revendication 6, **caractérisée en ce que** la broche supplémentaire (42) possède un axe commun (75) avec la broche de poignée (33) lorsqu'elle est soutenue par la plaque en berceau (30).

12. Moissonneuse-batteuse selon la revendication 4 ou l'une quelconque des revendications 5 à 11 lorsqu'elle se rapporte directement ou indirectement à la revendication 4, **caractérisée en ce qu'**un pivotement par inadvertance du levier (22) et de la poignée (21) durant les opérations de récolte est empêché par un écran latéral (60).

13. Moissonneuse-batteuse selon l'une quelconque des revendications 3 à 12, **caractérisée en ce que** l'encoche de support (51) comprend une paire de plaques parallèles dans lesquelles la première broche (43) est insérée, de telle manière, lorsque la broche supplémentaire (42) quitte la plaque en berceau (30), que la première broche (43) coulisse hors de l'encoche de support (51) en permettant l'enlèvement du contre-batteur (12) hors de la moissonneuse (1).

14. Moissonneuse-batteuse selon l'une quelconque des revendications précédentes, **caractérisée en ce qu'**au moins deux premières broches (43) et encoches associées de support (51) sont prévues à des emplacements écartés situés le long d'un côté du contre-batteur (12), et au moins deux mécanismes de verrouillage (20) sont prévus à des emplacements écartés situés le long du côté opposé du contre-batteur (12).
